# EUROPEAN PATENT APPLICATION

(11) **EP 3 922 950 A2**
(43) Date of publication of application: **15.12.2021**
(21) Application number: 21200555.7
(22) Date of filing: 01.10.2021
(51) Int. Cl.: G01C 21/34, G01C 21/36, G01C 21/00

(54) **ROAD INFORMATION PROCESSING METHOD AND APPARATUS, ELECTRONIC DEVICE, STORAGE MEDIUM AND PROGRAM**

(30) Priority: 13.10.2020 CN 202011090909
(71) Applicant: BEIJING BAIDU NETCOM SCIENCE TECHNOLOGY CO., LTD., No.10 Shangdi 10th Street Haidian District Beijing 100085 (CN)
(72) Inventor: ZHANG, Tongbin, BEIJING, 100085 (CN); HUANG, Jizhou, BEIJING, 100085 (CN); XIA, Deguo, BEIJING, 100085 (CN); DONG, Yongyan, BEIJING, 100085 (CN); YANG, Jianzhong, BEIJING, 100085 (CN); LU, Zhen, BEIJING, 100085 (CN)
(74) Representative: Brevalex

(57) **Abstract**

The disclosure discloses a road information processing method and apparatus, an electronic device and a storage medium, relates to the field of intelligent transportation, and may be used for the field of cloud computing or cloud. The specific implementation solution is as follows: acquiring a road image, and identifying a street lamp in the road image to obtain a street lamp identification result; associating the road image with an electronic map to obtain a road corresponding to the road image in the electronic map; and marking a street lamp attribute for the road corresponding to the road image in the electronic map based on the street lamp identification result. According to the embodiment of the disclosure, the user can be guided to avoid a road where no street lamp is present at night.

## Description

### TECHNICAL FIELD

The present disclosure relates to the field of data processing, in particular to the field of intelligent transportation.

### BACKGROUND

In recent years, the total number of road safety accidents has been high. Among them, the probability of road safety accidents at night is much higher than the probability of road safety accidents in day time. Therefore, night road safety has become one of the most important issues in the field of transportation.

### SUMMARY

The present disclosure provides a road information processing method and apparatus, an electronic device and a storage medium.

According to one aspect of the disclosure, there is provided a road information processing method, including:
acquiring a road image, and identifying a street lamp in the road image to obtain a street lamp identification result;
associating the road image with an electronic map to obtain a road corresponding to the road image in the electronic map; and
marking a street lamp attribute for the road corresponding to the road image in the electronic map based on the street lamp identification result.

According to another aspect of the disclosure, there is provided a road information processing apparatus, including:
an identification module configured for acquiring a road image, and identifying a street lamp in the road image to obtain a street lamp identification result;
an association module configured for associating the road image with an electronic map to obtain a road corresponding to the road image in the electronic map; and
a marking module configured for marking a street lamp attribute for the road corresponding to the road image in the electronic map based on the street lamp identification result.

According to another aspect of the present disclosure, there is provided an electronic device, including:
at least one processor; and
a memory communicatively connected to the at least one processor, wherein
the memory stores instructions executable by the at least one processor, and the instructions are executed by the at least one processor to enable the at least one processor to execute the method as provided in embodiments of the present disclosure.

According to another aspect of the present disclosure, there is provided a non-transitory computer-readable storage medium storing computer instructions, wherein the computer instructions are used to cause a computer to execute the method as provided in the embodiments of the present disclosure.

According to the technical solution of the disclosure, the street lamp attribute of the road corresponding to the road image in the electronic map is determined by identifying the street lamp in the road image and associating the road image with the electronic map. Because the road in the electronic map is marked with the street lamp attribute, the user can be guided to avoid a road where no street lamp is present at night, so that the night travel safety of the user is guaranteed, and the road safety accident is avoided.

It is to be understood that the content in this section is not intended to identify key or critical features of the embodiments of the present disclosure, nor is it intended to limit the scope of the disclosure. Other features of the present disclosure will become readily apparent from the following description.

### BRIEF DESCRIPTION OF THE DRAWINGS

The drawings are used to better understand the solution and do not constitute a limitation to the present disclosure, wherein:
FIG. 1 is a schematic diagram of a road information processing method according to an embodiment of the present disclosure;
FIG. 2 is a schematic diagram according to an application example of the present disclosure;
FIG. 3 is schematic diagram of a road information processing method according to another embodiment of the present disclosure;
FIG. 4 is schematic diagram of a road information processing apparatus according to an embodiment of the present disclosure;
FIG. 5 is a schematic diagram of a road information processing apparatus according to another embodiment of the present disclosure; and
FIG. 6 is a block diagram of an electronic device for implementing a road information processing method according to an embodiment of the present disclosure.

### DETAILED DESCRIPTION

Exemplary embodiments of the present disclosure are described below in combination with the accompanying drawings, including various details of the embodiments of the present disclosure to facilitate the understanding, and they should be considered as merely exemplary. Thus, it should be realized by those of ordinary skill in the art that various changes and modifications can be made to the embodiments described here without departing from the scope and spirit of the present disclosure. Also, for the sake of clarity and conciseness, the contents of well-known functions and structures are omitted in the following description.

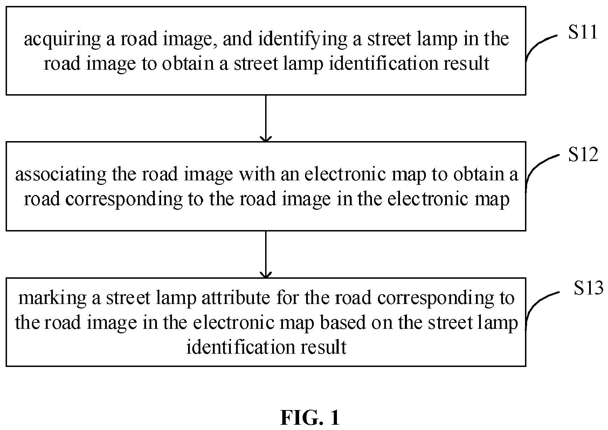

FIG. 1 is a schematic diagram of a road information processing method according to an embodiment of the present disclosure. As shown in FIG. 1, the method may include:
S11, acquiring a road image, and identifying a street lamp in the road image to obtain a street lamp identification result;
S12, associating the road image with an electronic map to obtain a road corresponding to the road image in the electronic map; and
S13, marking a street lamp attribute for the road corresponding to the road image in the electronic map based on the street lamp identification result.

Illustratively, the road image may be acquired by an image acquisition apparatus arranged on a road or a vehicle, or may be uploaded by a user, e.g., the road image may include user album information on an electronic map, etc.

In the embodiment of the disclosure, a street lamp in the road image may be identified based on a depth neural network model, wherein the depth neural network model may include a target detection model or a semantic segmentation model and the like. The deep neural network model may be obtained by training based on network structures such as Fully Convolutional Networks (FCN), U type Network (U-Net), Residual Network (ResNet).

The street lamp identification result may include whether a street lamp is identified or not, the number of the street lamp, the position information of the street lamp in the road image, and the like.

As an example, the road image may be associated with the electronic map according to shooting coordinate information of the road image, road information in the road image, etc., such as selecting a road closest to the shooting coordinate of the road image as the road corresponding to the road image, or selecting a road matching with gate address information in the road image as the road corresponding to the road image.

It is to be noted that, in practical applications, the above-mentioned order ofS11 and S12 is not limited, S11 may be performed first and then S12, or S12 may be performed first and then S11, or S11 and S12 are performed at the same time.

As an application example of firstly performing S11 and then performing S12, a plurality of road images may be acquired, and street lamp identification is performed on each road image in a plurality of road images. After a street lamp identification result is obtained, all or some of the road images are selected to be associated with an electronic map according to the street lamp identification result, to determine a road corresponding to the road image, and a street lamp attribute is marked for the road.

For example, a road image in which a street lamp is identified is associated with an electronic map to obtain a road corresponding to the road image in the electronic map, and the road is marked with a street lamp attribute as presence of a street lamp. Optionally, after all road images are identified and the corresponding roads are marked with street lamp attributes, the street lamp attributes of the unmarked roads are determined to be presence of no street lamp.

For another example, a road image in which no street lamp is identified is associated with an electronic map to obtain a road corresponding to the road image in the electronic map, and the road is marked with the street lamp attribute as presence of no street lamp. Optionally, after all road images are identified and the corresponding roads are marked with street lamp attributes, the street lamp attributes of the unmarked roads are determined to be presence of a street lamp.

As another example, each road image in a plurality of road images obtained is associated with an electronic map to obtain a road corresponding to each road image in the electronic map, and whether a road lamp is present is marked for the corresponding road according to whether the road lamp is identified.

As another application example of firstly performing S12 and then performing S11, a plurality of road images may be acquired, each road image in the plurality of road images is associated with an electronic map to determine a corresponding road in the electronic map. Then roads in the electronic map are traversed, some or all of road images corresponding to the roads are selected for street lamp identification, and the roads are marked with street lamp attributes in combination of the identification results of the images.

As an example, the street lamp attribute may include information on whether a street lamp is present, the number of street lamp, etc.

It can be seen that, according to the method provided by the embodiment of the disclosure, by identifying a street lamp in a road image and associating the road image with the electronic map, a street lamp attribute of a road corresponding to the road image in the electronic map is determined. Because the road in the electronic map is marked with the street lamp attribute, the user can be guided to avoid a road where no street lamp is present at night, the night travel safety of the user is guaranteed, and the road safety accident is avoided, and assistant decision-making information is provided for the intelligent traffic field.

In an exemplary embodiment, in S11, the identifying the street lamp in the road image to obtain the street lamp identification result, may include:
identifying a first street lamp element in the road image based on a target detection model, to obtain an identification result of the first street lamp element;
identifying a second street lamp element in the road image based on a semantic segmentation model, to obtain an identification result of the second street lamp element; and
obtaining the street lamp identification result based on the identification result of the first street lamp element and the identification result of the second street lamp element.

As an example, the first street lamp element may include a lamp cap, a lamp post, or a whole lamp, etc. The identification result of the first street lamp element may include whether the first street lamp element is identified or not, the number of the first street lamp element, the position information of the first street lamp elements in the road image, and the like. Accordingly, the second street lamp element may include a lamp cap, a lamp post, or a whole lamp, etc. The identification result of the second street lamp element may include whether the second street lamp element is identified or not, the number of the second street lamp element, the position information of the second street lamp elements in the road image, and the like.

In an example, the obtaining the street lamp identification result based on the identification result of the first street lamp element and the identification result of the second street lamp element, may include the following cases.
Case I: the first street lamp element and the second street lamp element are identified in a road image. Based on the case, a street lamp is determined to be identified in the road image, and the street lamp identification result is obtained as presence of a street lamp.
Case II: at least one of the first street lamp element or the second street lamp element is not identified in a road image. Based on the case, no street lamp is determined to be identified in the road image, and the street lamp identification result is obtained as presence of no street lamp.

In an example, the obtaining the street lamp identification result based on the identification result of the first street lamp element and the identification result of the second street lamp element, may include:
determining that a street lamp is identified in the road image in response to the fact that position information of the first street lamp element in the road image and position information of the second street lamp element in the road image meet a preset street lamp element position relation.

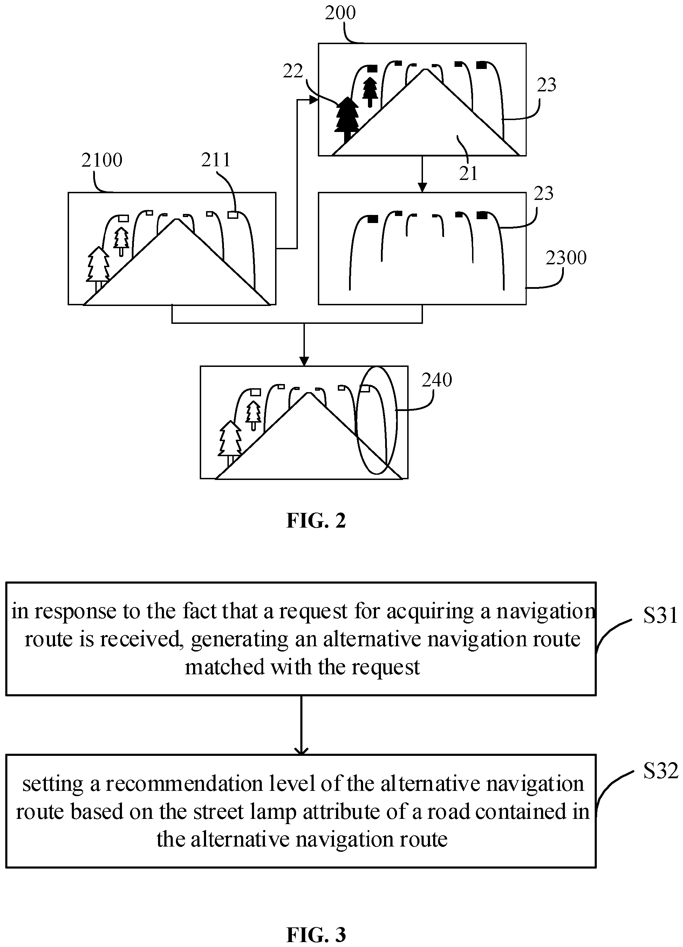

As an example, taking the first road lamp element as a lamp cap and the second road lamp element as a whole lamp, as shown in FIG. 2, based on an object detection model, a lamp cap 211 may be detected in a road image 2100, and a pixel coordinate set of the lamp cap 211 in the road image 2100 is determined. Based on a semantic segmentation model, a road 21, a tree 22 and a street whole lamp 23 in the road image 2100 may be segmented to obtain a semantic segmentation map 200, and then a whole lamp binary map 2300 is obtained based on the semantic segmentation map, so that pixel coordinates of the whole lamp 23 in the whole lamp binary map 2300, namely pixel coordinates in the road image, are obtained. Since the position relation between the whole lamp and the lamp cap is that the whole lamp includes the lamp cap, if a pixel coordinate set of the whole lamp 23 includes pixel coordinates in a pixel coordinate set of the lamp cap, it may be considered that the street lamp element position relation is met, and it is determined that a street lamp 240 is identified in the road image.

As there may be a deviation in the identification result of one street lamp element, for example, a fruit on a tree is identified as a lamp cap, under the condition that the pixel coordinate set of the lamp cap in the road image overlaps with the pixel coordinate set of the whole lamp in the road image, it is considered that a preset street lamp element position relation is met, a street lamp is determined to be identified in the road image, and therefore misjudgment of the street lamp identification result is reduced.

It can be seen that according to the above-mentioned exemplary embodiment, the accuracy of the street lamp identification result may be improved by combining the identification result of the first street lamp element and the identification result of the second street lamp element, thereby improving the accuracy of the street lamp attribute of the road in the electronic map, preventing from providing wrong guidance to the user due to wrong marking of the street lamp attribute, and further ensuring the night travel safety of the user.

In an exemplary embodiment, in the above S12, the associating the road image with the electronic map to obtain the road corresponding to the road image in the electronic map, may include:
based on a directed graph model, associating shooting coordinate information of the road image with road information in the electronic map, and determining a road corresponding to the associated road information to be the road corresponding to the road image.

As an example, the directed graph model may include a Hidden Markov Model (HMM).

In the embodiment of the present disclosure, the directed graph model may associate the shooting coordinate information of the road image with the road information in the electronic map, and determine the road corresponding to the associated road information as the road corresponding to the road image, that is, the directed graph model may output the corresponding road according to the input shooting coordinate information of the road image.

Because there may be a deviation between the shooting coordinate information of the road image and the coordinate information of the shot road, the road image is associated with the electronic map based on the directed graph model, so that the accuracy of the association can be improved, and the accuracy of the street lamp attribute of the road in the electronic map can be improved.

Illustratively, as shown in FIG. 3, the above method may further include:
S31, in response to the fact that a request for acquiring a navigation route is received, generating an alternative navigation route matched with the request; and
S32, setting a recommendation level of the alternative navigation route based on the street lamp attribute of a road contained in the alternative navigation route.

For example, when a request for acquiring a navigation route is received in a predetermined nighttime period, a matched alternative navigation route is generated according to the navigation starting point and the navigation end point included in the request. The number of alternative navigation routes may be multiple, e.g. two or three. For each alternative navigation route, the total length of the road where no street lamp is present is determined based on the street lamp attribute of the road therein, and the recommended level of the alternative navigation route is set according to the total length, for example, the recommended level of the alternative navigation route with the minimum total length among the plurality of alternative navigation routes is set to be the highest.

According to the above embodiment, the recommendation level of a navigation route may be optimized according to the street lamp attribute of a road, the user is guided to select a road where a street lamp is present to travel, the night travel safety of the user is guaranteed, and the road safety accident is avoided.

As an example, the above method may further include:
determining a display style of each road in the electronic map based on the street lamp attribute of each road in the electronic map.

For example, a road where a street lamp is present may be displayed in a particular display style, for instance, a road where a street lamp is present is displayed in a bright color, to guide the user in selecting a road where a street lamp is present to travel.

Alternatively, the step of determining the display style may be performed in a case where the display mode of the electronic map is a night mode.

According to the above embodiment, the user is guided to select the road where a street lamp is present to travel, so that the night travel safety of the user is guaranteed, and the road safety accident is avoided.

As an example, the above method may further include:
determining a road where a user is located based on location information; and
in response to the fact that the street lamp attribute of the road where the user is located is presence of no street lamp, outputting safety prompt information.

For example, after the recommendation level of an alternative navigation route is set based on the street lamp attribute, if the user selects an alternative navigation route containing a road where no street lamp is present with the lower recommendation level, safety prompt information, such as prompt information of "you are about to enter an area in which no street lamp is present, please pay attention to safety" and the like, is output when the user is about to enter a road area in which no street lamp is present.

According to the embodiment, the navigation prompt may be optimized according to the street lamp attribute of the road, so that the night travel safety of the user is guaranteed, and the road safety accident is avoided.

In a specific application example, according to the characteristics of a night driving navigation scene and a walking and riding navigation scene, the user may be guided to avoid a road where no street lamp is present by adopting different modes respectively.

In a nighttime driving navigation scene, one or more of the following modes may be adopted:
(1) On a route preference page, an option of preferentially selecting a road where a street lamp is present is added, to support a user to set a route preference as preferential selection of a road where a street lamp is present. After the user sets the route preference, the recommendation level of an alternative navigation route is set based on the street lamp attribute of each road in the alternative navigation route generated by a navigation request. The recommendation level of a navigation route consisting of a road where a street lamp is present is the highest.
(2) Near a display area of an alternative navigation route with a high recommendation level, such as a navigation route with the minimum total length of a road where no street lamp is present, a prompt of "avoiding an area in which no street lamp is present" is displayed, to prompt the user that the route has avoided a road area in which no street lamp is present.
(3) When the user is about to pass through a road area in which no street lamp is present, the user is reminded of "you are about to enter an area in which no street lamp is present, please pay attention to the vehicle lamp condition and drive carefully".

In a nighttime walking and riding navigation scene, one or more of the following modes may be adopted:
(1) A night mode function is added in a road network interface of an electronic map. When a user selects a night mode, a road where a street lamp is present is rendered in a special style, so that a decision is provided for a walking route of the user.
(2) When a walking and riding navigation route is recommended for the user in a preset nighttime period, a navigation route for avoiding a road where no street lamp is present is generated, such as a navigation route completely consisting of a road where a street lamp is present, and a prompt of "avoiding an area in which no street lamp is present" is displayed near a display area of the route, to prompt the user that the route has avoided an area in which the street lamp lighting is absent.
(3) When the user is about to pass through a road area in which no street lamp is present, the user is reminded of "you are about to enter an area in which no street lamp is present, please pay attention to turning on a mobile phone flashlight and pay attention to safety", and a one-key alarm button is provided on a navigation page so as to ensure the safety of the user.

Therefore, according to the above method provided by the embodiment of the disclosure, the user can be guided to avoid the road where no street lamp is present at night, so that the night travel safety of the user is guaranteed, the road safety accident is avoided, and assistant decision-making information is provided for the intelligent traffic field.

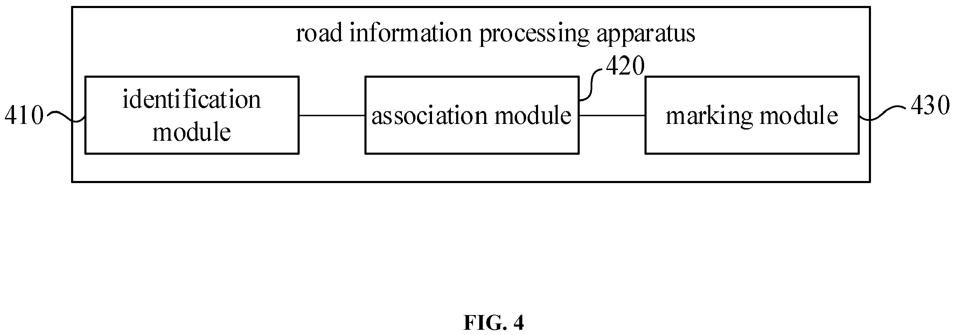

As the implementation of the above methods, the disclosure also provides a road information processing apparatus. As shown in FIG. 4, the apparatus may include:
an identification module 410 configured for acquiring a road image, and identifying a street lamp in the road image to obtain a street lamp identification result;
an association module 420 configured for associating the road image with an electronic map to obtain a road corresponding to the road image in the electronic map; and
a marking module 430 configured for marking a street lamp attribute for the road corresponding to the road image in the electronic map based on the street lamp identification result.

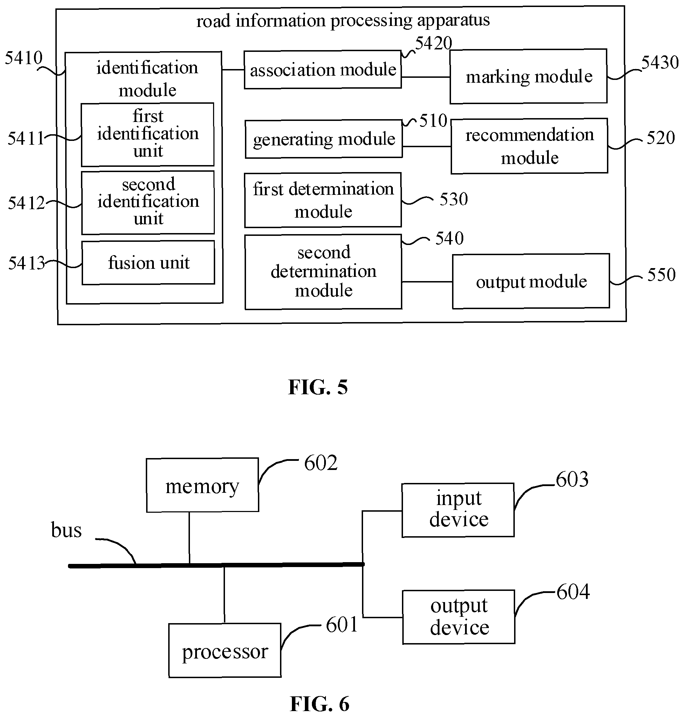

An identification module 5410, an association module 5420 and a marking module 5430 shown in FIG. 5 are modules same as or similar to the identification module 410, the association module 420 and the marking module 430 shown in FIG. 4, respectively. Illustratively, as shown in FIG. 5, the identification module 5410 may include:
a first identification unit 5411 configured for identifying a first street lamp element in the road image based on a target detection model, to obtain an identification result of the first street lamp element;
a second identification unit 5412 configured for identifying a second street lamp element in the road image based on a semantic segmentation model, to obtain an identification result of the second street lamp element; and
a fusion unit 5413 configured for obtaining the street lamp identification result based on the identification result of the first street lamp element and the identification result of the second street lamp element.

Illustratively, the association module 5420 is configured for, based on a directed graph model, associating shooting coordinate information of the road image with road information in the electronic map, and determining a road corresponding to the associated road information to be the road corresponding to the road image.

Illustratively, as shown in FIG. 5, the above apparatus may further include:
a generating module 510 configured for, in response to the fact that a request for acquiring a navigation route is received, generating an alternative navigation route matched with the request; and
a recommendation module 520 configured for setting a recommendation level of the alternative navigation route based on the street lamp attribute of a road contained in the alternative navigation route.

Illustratively, as shown in FIG. 5, the above apparatus may further include:
a first determination module 530 configured for determining a display style of each road in the electronic map based on the street lamp attribute of each road in the electronic map.

Illustratively, as shown in FIG. 5, the above apparatus may further include:
a second determination module 540 configured for determining a road where a user is located based on location information; and
an output module 550 configured for, in response to the fact that the street lamp attribute of the road where the user is located is presence of no street lamp, outputting safety prompt information.

In accordance with embodiments of the present disclosure, the present disclosure also provides an electronic device and a readable storage medium.

As shown in FIG. 6 which is a block diagram of an electronic device for implementing a road information processing method according to an embodiment of the present disclosure. The electronic device is intended to represent various forms of digital computers, such as laptop computers, desktop computers, work table, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, connections and relationships and functions thereof are by way of example only and are not intended to limit the implementations of the present disclosure described and/or claimed herein.

As shown in FIG. 6, the electronic device may include: one or more processors 601, a memory 602, and interfaces for connecting components, including a high-speed interface and a low-speed interface. The various components are interconnected by utilizing different buses and may be mounted on a common mainboard or otherwise as desired. The processor may process instructions for execution within the electronic device, including instructions stored in a memory or on a memory to display graphical information of the GUI on an external input/output device (such as a display device coupled to the interface). In other embodiments, multiple processors and/or multiple buses may be used with multiple memories and multiple memories, if desired. Also, multiple electronic device may be connected, each providing some of the necessary operations (e.g., as an array of servers, a set of blade servers, or a multi-processor system). An example of a processor 601 is shown in FIG. 6.

The memory 602 is a non-transitory computer-readable storage medium provided in the present disclosure. Wherein the memory stores instructions executable by at least one processor to cause the at least one processor to perform the road information processing method provided herein. The non-transitory computer-readable storage medium of the present disclosure stores computer instructions for causing a computer to perform the road information processing method provided herein.

The memory 602, as a non-transitory computer-readable storage medium, may be used to store non-transitory software programs, non-transitory computerexecutable programs, and modules, such as program instructions/modules corresponding to the road information processing method in embodiments of the present disclosure (e.g., identification module 410, association module 420, and marking module 430 shown in FIG. 4). The processor 601 executes various functional applications of the server and data processing, i.e., the processing method of the road information in the above-described method embodiment, by running non-transient software programs, instructions, and modules stored in the memory 602.

The memory 602 may include a storage program area and a storage data area, wherein the storage program area may store an operating system, an application program required for at least one function; The storage data area may store data created according to the use of the electronic device for implementing the road information processing method, etc. In addition, memory 602 may include high-speed random access memory, and may also include a non-transitory memory, such as at least one disk storage device, flash memory device, or other non-transitory solid state storage device. In some embodiments, the memory 602 may optionally include a memory remotely located relative to the processor 601, which may be connected via a network to the electronic device for implementing the road information processing method. Examples of such networks include, but are not limited to, the Internet, intranets, local area networks, mobile communication networks, and combinations thereof.

The electronic device for implementing the road information processing method may further include: an input device 603 and an output device 604. The processor 601, the memory 602, the input device 603, and the output device 604 may be connected by a bus or in other ways, and the bus connection is taken as an example in FIG. 6.

The input device 603 may receive input digital or character information and generate a key signal input related to a user setting and a functional control of the electronic device for implementing the road information processing method, for example, a touch screen, a keypad, a mouse, a trackpad, a touchpad, a indicating arm, one or more mouse buttons, a trackball, a joystick and other input devices. The output device 604 may include a display device, an auxiliary lighting device (e.g., LED), a touch feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in a digital electronic circuit system, an integrated circuit system, an application specific integrated circuit (ASIC), a computer hardware, a firmware, a software, and/or a combination thereof. These various embodiments may include: an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

These computing programs (also referred to as programs, software, software applications, or codes) may include machine instructions of a programmable processor, and may be implemented using high-level procedural and/or object-oriented programming languages, and/or assembly/machine languages. As used herein, the terms "machine-readable medium" and "computer-readable medium" may refer to any computer program product, apparatus, and/or device (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" may refer to any signal used to provide machine instructions and/or data to a programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, also called as a cloud computing server or a cloud host, which is a host product in a cloud computing service system, to solve the defects of difficult management and weak business expansibility in the services of the traditional physical host and the virtual private server (VPS). The server may also be a server of a distributed system, or a server incorporating a blockchain.

According to the technical solution of the disclosure, the street lamp attribute of the corresponding road in the electronic map is determined by identifying the street lamp in the road image and associating the road image with the electronic map. Because the road in the electronic map is marked with the street lamp attribute, the user can be guided to avoid the road where no street lamp is present at night, so that the night travel safety of the user is guaranteed, and the road safety accident is avoided.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of this disclosure are intended to be included within the scope of this disclosure.

## Claims

1. A road information processing method, comprising:
acquiring (S11) a road image, and identifying a street lamp in the road image to obtain a street lamp identification result;
associating (S12) the road image with an electronic map to obtain a road corresponding to the road image in the electronic map; and
marking (S13) a street lamp attribute for the road corresponding to the road image in the electronic map based on the street lamp identification result.

2. The method of claim 1, wherein the identifying (S11) the street lamp in the road image to obtain the street lamp identification result comprises:
identifying a first street lamp element in the road image based on a target detection model, to obtain an identification result of the first street lamp element;
identifying a second street lamp element in the road image based on a semantic segmentation model, to obtain an identification result of the second street lamp element; and
obtaining the street lamp identification result based on the identification result of the first street lamp element and the identification result of the second street lamp element.

3. The method of claim 1, wherein the associating (S12) the road image with the electronic map to obtain the road corresponding to the road image in the electronic map comprises:
based on a directed graph model, associating shooting coordinate information of the road image with road information in the electronic map, and determining a road corresponding to the associated road information to be the road corresponding to the road image.

4. The method of any one of claims 1-3, further comprising:
in response to the fact that a request for acquiring a navigation route is received, generating (S31) an alternative navigation route matched with the request; and
setting (S32) a recommendation level of the alternative navigation route based on the street lamp attribute of a road contained in the alternative navigation route.

5. The method of any one of claims 1-3, further comprising:
determining a display style of each road in the electronic map based on the street lamp attribute of each road in the electronic map.

6. The method of any one of claims 1-3, further comprising:
determining a road where a user is located based on location information; and
in response to the fact that the street lamp attribute of the road where the user is located is presence of no street lamp, outputting safety prompt information.

7. A road information processing apparatus, comprising:
an identification module (410, 5410) configured for acquiring a road image, and identifying a street lamp in the road image to obtain a street lamp identification result;
an association module (420, 5420) configured for associating the road image with an electronic map to obtain a road corresponding to the road image in the electronic map; and
a marking module (430, 5430) configured for marking a street lamp attribute for the road corresponding to the road image in the electronic map based on the street lamp identification result.

8. The apparatus of claim 7, wherein the identification module (410, 5410) comprises:
a first identification unit (5411) configured for identifying a first street lamp element in the road image based on a target detection model, to obtain an identification result of the first street lamp element;
a second identification unit (5412) configured for identifying a second street lamp element in the road image based on a semantic segmentation model, to obtain an identification result of the second street lamp element; and
a fusion unit (5413) configured for obtaining the street lamp identification result based on the identification result of the first street lamp element and the identification result of the second street lamp element.

9. The apparatus of claim 7, wherein the association module (420, 5420) is configured for, based on a directed graph model, associating shooting coordinate information of the road image with road information in the electronic map, and determining a road corresponding to the associated road information to be the road corresponding to the road image.

10. The apparatus of any one of claims 7-9, further comprising:
a generating module (510) configured for, in response to the fact that a request for acquiring a navigation route is received, generating an alternative navigation route matched with the request; and
a recommendation module (520) configured for setting a recommendation level of the alternative navigation route based on the street lamp attribute of a road contained in the alternative navigation route.

11. The apparatus of any one of claims 7-9, further comprising:
a first determination module (530) configured for determining a display style of each road in the electronic map based on the street lamp attribute of each road in the electronic map.

12. The apparatus of any one of claims 7-9, further comprising:
a second determination module (540) configured for determining a road where a user is located based on location information; and
an output module (550) configured for, in response to the fact that the street lamp attribute of the road where the user is located is presence of no street lamp, outputting safety prompt information.

13. An electronic device, comprising:
at least one processor (601); and
a memory (602) communicatively connected to the at least one processor, wherein
the memory stores instructions executable by the at least one processor, and the instructions are executed by the at least one processor to enable the at least one processor to perform the method of any one of claims 1-6.

14. A non-transitory computer-readable storage medium storing computer instructions, wherein the computer instructions cause a computer to perform the method of any one of claims 1-6.

15. A computer program comprising computer program instructions, the computer program instructions, when executed by a computer, cause the computer to perform the method according to any one of claims 1-6.
